# EUROPÄISCHE PATENTSCHRIFT

(11) **EP 2 323 930 B1**
(45) Veröffentlichungstag und Bekanntmachung des Hinweises auf die Patenterteilung: **21.03.2012**
(21) Anmeldenummer: 10739485.0
(22) Anmeldetag: 18.06.2010
(51) Int. Cl.: B65G 47/08, B01L 9/00, B29C 45/26, B65B 35/30

(54) **VERPACKUNGSVERFAHREN, VERPACKUNGSVORRICHTUNG SOWIE SPRITZGUSSANLAGE**
PACKAGING METHOD, PACKAGING DEVICE AND INJECTION MOLDING MACHINE
PROCÉDÉ D'EMBALLAGE, DISPOSITIF D'EMBALLAGE AINSI QU'INSTALLATION DE MOULAGE PAR INJECTION

(30) Priorität: 07.07.2009 DE 102009032191
(43) Veröffentlichungstag der Anmeldung: 25.05.2011
(73) Patentinhaber: Waldorf Technik GmbH & Co. KG, 78234 Engen (DE)
(72) Erfinder: BOOS, Christian, 79194 Gundelfingen (DE)
(74) Vertreter: Wagner, Kilian
(86) Internationale Anmeldenummer: PCT/EP2010/003680
(87) Internationale Veröffentlichungsnummer: WO 2011/003507

(56) Entgegenhaltungen:
- EP-A2- 1 854 723
- DE-A1-102005 031 695
- DE-U1- 9 307 876
- US-A- 5 855 104

## Beschreibung

Die Erfindung betrifft ein Verpackungsverfahren zum Verpacken von als Pipettenspitzen oder medizinische Reaktionsgefäße ausgebildeten Kunststoffspritzgussteilen, umfassend die Schritte:
- gleichzeitige Entnahme von K Kunststoffspritzgussteilen aus K Kavitäten, und
- Ablage der Kunststoffspritzgussteile in einem Zwischenspeicher, und
- Beladen von V Verpackungseinheit(en), jeweils mit A Kunststoffspritzgussteilen aus dem Zwischenspeicher, wobei V jede ganze Zahl sein kann (z.B. 1, 2, 3, 4, etc.)

Ferner betrifft die Erfindung eine Verpackungsvorrichtung zum Verpacken von als Pipettenspitzen oder medizinische Reaktionsgefäße ausgebildeten Kunststoffspritzgussteilen, umfassend:
- zum gleichzeitigen Entnehmen von K Kunststoffspritzgussteilen aus K Kavitäten und zum Ablegen der Kunststoffspritzgussteile in einem Zwischenspeicher ausgebildete Entnahmemittel, und
- einen Zwischenspeicher, und
- zum Beladen von V Verpackungseinheiten jeweils mit A Kunststoffspritzgussteilen aus dem Zwischenspeicher ausgebildete Belademittel, und
- zum Ansteuern der Entnahmemittel und/oder der Belademittel ausgebildete Steuermittel.

Ferner betrifft die Erfindung eine Spritzgussanlage mit einer derartigen Verpackungsvorrichtung.

Bei bekannten Verpackungsverfahren zum Verpacken von als Pipettenspitzen oder medizinische Reaktionsgefäße, insbesondere zur Blutanalyse, ausgebildeten Kunststoffspritzgussteilen werden gleichzeitig K Kunststoffspritzgussteile aus K Kavitäten einer Spritzgussvorrichtung entnommen und, in der Regel als Schüttgut, zwischengespeichert. Aus diesem Zwischenspeicher werden dann V Verpackungseinheiten jeweils mit A Kunststoffspritzgussteilen beladen. Nachteilig bei dem bekannten Verfahren ist, dass keine Zuordnung der abgepackten Kunststoffspritzgussteile zu bestimmten Kavitäten möglich ist. Es ist also nicht mehr nachvollziehbar, aus welcher Kavität bzw. aus welchen Kavitäten die Kunststoffspritzgussteile einer bestimmten Verpackungseinheit stammen. Dies führt bei nur einem einzigen fehlerhaften Kunststoffspritzgussteil in einer Verpackungseinheit dazu, dass die gesamte Produktion zurückgerufen werden muss und nicht nur die mit Kunststoffspritzgussteilen aus einer bestimmten Kavität bzw. aus bestimmten Kavitäten bestückten Verpackungseinheiten.

Ein bezüglich des vorgehend geschilderten Problems verbessertes Verpackungsverfahren sieht vor, die als Pipettenspitzen oder medizinische Reaktionsgefäße ausgebildeten Kunststoffspritzgussteile ohne Ablage in einem Zwischenspeicher unmittelbar, d.h. ohne Zwischenspeicherung aus den Kavitäten in die Verpackungseinheiten zu überführen. Nachteilig hierbei ist, dass die Anzahl A von in eine Verpackungseinheit zu befördernden Kunststoffspritzgussteilen der Anzahl K Kavitäten entsprechen muss oder dass die Anzahl A von in einer Verpackungseinheit zu überführenden Kunststoffspritzgussteilen ein ganzzahliges Vielfaches der Anzahl K Kavitäten sein muss. So ist es beispielsweise in der Praxis nicht möglich, mit den bekannten Verpackungsverfahren bei einer fixen Anzahl von K = 32 Kavitäten Verpackungseinheiten mit A = 105 Kunststoffspritzgussteilen zu beladen. Dies wäre nur möglich, wenn 105 mal gleichzeitig 32 Verpackungseinheiten bei jedem Schuss mit jeweils einem Kunststoffspritzgussteil beladen würden. Dies scheitert jedoch in der Regel an dem enormen Platzbedarf für die gleichzeitige Beladung von 32 Verpackungseinheiten.

Der Erfindung liegt daher der Gedanke zugrunde, ein optimiertes Verpackungsverfahren für Pipettenspitzen oder medizinische Reaktionsgefäße anzugeben, mit dem zum einen nachvollziehbar ist, aus welcher Kavität bzw. aus welchen Kavitäten die Kunststoffspritzgussteile einer Verpackungseinheit entstammen und bei dem zudem die Anzahl A der Kunststoffspritzgussteile einer Verpackungseinheit unabhängig wählbar ist von der fixen Anzahl K an Kavitäten eines Spritzgusswerkzeugs. Bevorzugt soll unabhängig von der Anzahl A der in einer Verpackungseinheit aufzunehmenden Kunststoffspritzgussteile nicht die Notwendigkeit bestehen, dass die Anzahl V Verpackungseinheiten der Anzahl K Kavitäten des Spritzgusswerkzeuges entspricht. Ferner besteht die Aufgabe darin, eine entsprechend optimierte Verpackungsvorrichtung zur Durchführung eines derartigen Verfahrens anzugeben. Darüber hinaus besteht die Aufgabe darin, eine Spritzgussanlage mit einer entsprechend optimierten Verpackungsvorrichtung anzugeben.

Hinsichtlich des Verpackungsverfahrens wird die Aufgabe mit den Merkmalen des Anspruchs 1, hinsichtlich der Verpackungsvorrichtung mit den Merkmalen des Anspruchs 6 und hinsichtlich der Spritzgussanlage mit den Merkmalen des Anspruchs 15 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, die aus den K Kavitäten entnommenen K Kunststoffspritzgussteile geordnet in Untergruppen in einem Zwischenspeicher abzuladen, d.h. gleichmäßig auf U Untergruppen zu verteilen. Dabei ist es möglich, dass bei jedem Schuss, d.h. bei jedem Entnahmezyklus immer nur ein Kunststoffspritzgussteil pro Untergruppe abgelegt wird, oder aber mehrere Kunststoffspritzgussteile pro Untergruppe und zwar jeweils in jeder Untergruppe gleich viele Spritzgussteile. In jedem Fall sind mehrere Entnahmezyklen zum Füllen der Untergruppen notwendig. Das Entnehmen der K Kunststoffspritzgussteile und Ablegen in den Untergruppen erfolgt mehrfach und wird so lange wiederholt, bis in jeder Untergruppe eine Anzahl L Kunststoffspritzgussteile vorhanden ist, wobei die Anzahl L der Kunststoffteile einer Untergruppe der Anzahl A von in eine der Verpackungseinheiten zu ladenden Kunststoffspritzgussteilen oder einem ganzzahligen Teiler von A entspricht. Mit einem nach dem Konzept der Erfindung durchgeführten Verfahren ist es erstmals möglich, unabhängig von der fixen Anzahl K an Kavitäten des Spritzgusswerkzeuges Verpackungseinheiten mit einer beliebigen Anzahl A von als Pipettenspitzen oder medizinische Reaktionsgefäße ausgebildeten Kunststoffspritzgussteilen ohne überbleibenden Überschuss zu befüllen. Es können in einer Spritzgussanlage mit 32 Kavitäten beispielsweise Verpackungseinheiten mit 105 Kunststoffspritzgussteilen bestückt werden, ohne dass die Notwendigkeit besteht, gleichzeitig 32 Verpackungseinheiten zu befüllen. Dies kann beispielsweise dadurch realisiert werden, dass in 105 Entnahmezyklen insgesamt 32 Untergruppen mit jeweils 105 Kunststoffspritzgussteilen auf dem Zwischenspeicher gebildet werden, und dass nach dem Fertigstellen der 32 Untergruppen beispielsweise 1, 2, 4, 8, 16 oder 32 Verpackungseinheiten gleichzeitig jeweils mit 105 Kunststoffspritzgussteilen bestückt werden. Ebenso ist es möglich, 32 Untergruppen mit jeweils 21 Kunststoffspritzgussteilen zu bilden, wobei dann immer 5 Untergruppen zu einer Verpackungseinheit zusammengefasst werden können. Die Herstellungswegnachvollziehbarkeit ist insofern gegeben, als dass für jede Verpackungseinheit eine definierte Aussage getroffen werden kann, aus welchen 5 Kavitäten genau die Kunststoffspritzgussteile entstammen. Analog ist es möglich, 32 Untergruppen mit jeweils 7 Kunststoffspritzgussteilen zu bilden und jeweils 15 Untergruppen zu einer Verpackungseinheit zusammenzufassen. Ebenso können 32 Untergruppen mit jeweils 3 Kunststoffspritzgussteilen gebildet und jeweils 35 Untergruppen pro Verpackungseinheit zusammengefasst werden. Bevorzugt entspricht die Anzahl V der gleichzeitig zu beladenen Verpackungseinheiten nicht der Anzahl K Kavitäten. Ganz besonders bevorzugt entspricht die Anzahl V der gleichzeitig zu beladenen Verpackungseinheiten einem ganzzahligen Teiler von A. Es ist also auch möglich, gleichzeitig immer nur eine Verpackungseinheit aus dem Zwischenspeicher zu bestücken oder mehrere Verpackungseinheiten gleichzeitig. Anders ausgedrückt kann die Anzahl V den Wert 1 haben.

Sollen mit 32 Kavitäten beispielsweise 96 Kunststoffspritzgussteile pro Verpackungseinheit realisiert werden, so gibt es hierzu mit einem nach dem Konzept der Erfindung ausgebildeten Verfahren eine Vielzahl von Möglichkeiten. So können beispielsweise 32 Untergruppen mit jeweils 96 Kunststoffspritzgussteilen auf dem Zwischenspeicher erstellt werden. Auch ist es möglich und bevorzugter 16 Untergruppen mit jeweils 96 Kunststoffteilen zu bilden, wobei bei jedem Entnahmezyklus jede der 16 Untergruppen mit jeweils zwei Kunststoffspritzgussteilen bestückt wird. Ebenso ist es möglich, beispielsweise 16 Untergruppen mit jeweils 16 Kunststoffspritzgussteilen zu bilden und immer vier der Untergruppen zu einer Verpackungseinheit zusammenzufassen, wobei gleichzeitig bevorzugt nur eine Verpackungseinheit oder nur zwei Verpackungseinheiten oder nur vier Verpackungseinheiten beladen werden können, also weniger Verpackungseinheiten gleichzeitig als Kavitäten vorhanden sind. Jedenfalls ist es nicht notwendig, gleichzeitig 32 Verpackungseinheiten mit jeweils 96 Kunststoffspritzgussteilen in 96 Entnahmezyklen ohne Zwischenspeicherung zu beladen.

Selbst für den Fall, dass 32 Untergruppen mit jeweils 96 Kunststoffspritzgussteilen auf dem Zwischenspeicher gebildet werden, ist der Flächenbedarf einer entsprechend ausgebildeten Verpackungsvorrichtung im Vergleich zu bekannten Verpackungsvorrichtungen enorm, da selbst für den Fall identischer Rastermaße im Zwischenspeicher und den Verpackungseinheiten auf dem Zwischenspeicher bevorzugt eine größere Anzahl von Kunststoffspritzgussteilen pro Flächeneinheit abgelegt werden kann, da nicht zur Aufnahme von Kunststoffspritzgussteilen dienende, meist randseitige Verpackungseinheitsflächen auf dem Zwischenspeicher nicht dargestellt werden müssen.

Idealerweise wird das nach dem Konzept der Erfindung ausgebildete Verfahren angewendet, wenn die Anzahl der pro Verpackungseinheit vorzusehenden Kunststoffspritzgussteile nicht der Anzahl der Kavitäten oder nicht einem ganzzahligen Vielfachen der Anzahl an Kavitäten entspricht.

Wesentlicher Kern der Erfindung ist es zudem, dass die Untergruppen in einer gemeinsamen Ablageebene angeordnet werden, also vorzugsweise auf einem plattenartigen Zwischenspeicher nebeneinander und nicht übereinander, wodurch eine zur Ausbildung des Verpackungsverfahrens ausgebildete Verpackungsvorrichtung vergleichsweise einfach aufgebaut werden kann.

In Weiterbildung der Erfindung ist mit Vorteil vorgesehen, dass die K Kunststoffspritzgussteile derart zu Untergruppen zusammengefasst werden, dass die Anzahl U der Untergruppen auf dem Zwischenspeicher der Anzahl V der Verpackungseinheiten oder einem ganzzahligen Vielfachen von V entspricht, um zu ermöglichen, dass bei jedem Verpackungszyklus der gesamte Zwischenspeicher geleert werden kann. Dies ist jedoch keine zwingende Voraussetzung zur Realisierung der zuvor beschriebenen, wesentlichen Vorteile des Verfahrens. So können bei Bedarf bei jedem Verpackungszyklus Untergruppen auf dem Zwischenspeicher verbleiben, die bei einem späteren Verpackungszyklus verpackt werden.

Gemäß einer möglichen Ausführungsvariante werden die Kunststoffspritzgussteile auf dem Zwischenspeicher derart abgelegt, dass diese einen geringeren Flächenbedarf benötigen als in der Verpackungseinheit. Anders ausgedrückt ist die Anzahl der Kunststoffspritzgussteile pro Flächeneinheit im Zwischenspeicher höher, vorzugsweise mindestens doppelt so hoch, ganz besonders bevorzugt mindestens drei mal so hoch wie bei einer Verpackungseinheit. Alternativ ist es möglich und bevorzugt, dass das Rastermaß der Kunststoffspritzgussteile auf dem Zwischenspeicher dem Rastermaß in den Verpackungseinheiten entspricht. Der Flächenbedarf auf dem Zwischenspeicher kann trotzdem geringer ausfallen, da eingesetzte Verpackungseinheitsflächen, wie zuvor bereits erläutert, auf dem Zwischenspeicher nicht dargestellt werden müssen.

Besonders zweckmäßig ist es, wenn die Kunststoffspritzgussteile einer bestimmten Kavität immer einer bestimmten Untergruppe zugeordnet werden, um den Herstellungsweg optimal nachvollziehen zu können. Für den Fall, dass eine Untergruppe aus mehreren Kavitäten bestückt wird, ist es von Vorteil, wenn dieser Zusammenhang gleich bleibt, um zumindest eine Aussage darüber treffen zu können, aus welchen Kavitäten die Kunststoffspritzgussteile einer Verpackungseinheit entstammen, um somit im Fehlerfall die Suche eingrenzen zu können und nur bestimmte, entsprechend gekennzeichnete Verpackungseinheiten rückrufen zu müssen.

Besonders zweckmäßig ist es, wenn jede Untergruppe nach jedem Entnahmezyklus immer um die gleiche Anzahl von Kunststoffteilen, vorzugsweise um ein einziges Kunststoffspritzgussteil, erweitert wird, wobei auch eine Ausführungsform realisierbar ist, bei der die Anzahl der in eine Untergruppe zu überführenden Kunststoffspritzgussteile von Entnahmezyklus zu Entnahmezyklus schwankt.

Besonders zweckmäßig ist es, wenn die Untergruppen als zusammengehörige Einheit auf dem Zwischenspeicher abgebildet bzw. abgelegt werden, dass also die Kunststoffspritzgussteile einer Untergruppe in einer festen Relativposition zueinander angeordnet sind. Ganz besonders bevorzugt ist es, wenn die Untergruppen auf dem Zwischenspeicher erkennbar sind, was dadurch realisiert werden kann, dass die Untergruppen mit Abstand zueinander angeordnet werden, was jedoch nicht zwingend ist.

Wesentlich ist lediglich, dass eine Steuereinheit die Position der zu einer bestimmten Untergruppe gehörigen Kunststoffspritzgussteile kennt. Daher können grundsätzlich mehrere Kunststoffspritzgussteile unterschiedlicher Untergruppen unmittelbar nebeneinander angeordnet werden. Vorteilhaft ist eine Ausgestaltungsform des Verfahrens, bei der die Relativposition, d.h. der Abstand der Kunststoffspritzgussteile beim Entnahmezyklus nicht verändert wird, dass die entnommenen Kunststoffspritzgussteile also auf dem Zwischenspeicher den gleichen Abstand zueinander aufweisen, wie in den Kavitäten. Selbstverständlich ist es auch denkbar, jedoch technisch aufwändiger, ein Relatiwerstellen der Kunststoffspritzgussteile beim Entnahmevorgang zu realisieren, um somit eine noch größere Raumersparnis bei der Ablage im Zwischenspeicher realisieren zu können.

Besonders bevorzugt ist als Zwischenspeicher eine Platte vorgesehen, die eine Vielzahl von Ablagepositionen aufweist, wobei die Ablagepositionen bevorzugt durch Vertiefungen oder Fortsätze definiert sind.

Wie zuvor bereits mehrfach angedeutet, ist es möglich, dass jede Verpackungseinheit mit einer einzigen und alternativ mit mehreren Untergruppen bestückt wird.

In Weiterbildung der Erfindung ist mit Vorteil vorgesehen, dass die U Untergruppen als voneinander separate Einheiten nebeneinander, vorzugsweise mit Seitenabstand zueinander, abgelegt werden.

In Weiterbildung der Erfindung ist mit Vorteil vorgesehen, dass die bei jedem Entnahmezyklus aus den K Kavitäten entnommenen K Kunststoffspritzgussteile in derselben Relativposition zueinander im Zwischenspeicher abgelegt werden.

In Weiterbildung der Erfindung ist mit Vorteil vorgesehen, dass als Zwischenspeicher eine Platte mit einer der Ablagepositionen entsprechenden Anzahl von Vertiefungen oder Aufsteckelementen verwendet wird.

In Weiterbildung der Erfindung ist mit Vorteil vorgesehen, dass die V Verpackungseinheiten jeweils mit einer einzigen Untergruppe oder jeweils mit mehreren Untergruppen beladen werden.

Die Erfindung führt auch auf eine Verpackungsvorrichtung, die vorzugsweise zur Durchführung eines wie zuvor beschrieben ausgeführten Verpackungsverfahrens ausgebildet ist. Die Verpackungsvorrichtung umfasst Entnahmemittel zum gleichzeitigen Entnehmen von K Kunststoffspritzgussteilen aus K Kavitäten und zum Ablegen dieser Kunststoffspritzgussteile in einem Zwischenspeicher. Femer umfasst die Verpackungsvorrichtung einen Zwischenspeicher und Belademittel zum Beladen mindestens einer Verpackungseinheit mit A Kunststoffspritzgussteilen aus dem Zwischenspeicher. Ferner umfasst die Verpackungsvorrichtung Steuermittel, die zum Ansteuern der Entnahmemittel und/oder der Belademittel ausgebildet sind. Wesentlich ist, dass ein flächiger Zwischenspeicher eingesetzt wird, der eine Vielzahl von in einer Ablageebene nebeneinander angeordnete Ablagepositionen aufweist, um nebeneinander mehrere Untergruppen auf dem Zwischenspeicher schaffen zu können. Ganz besonders bevorzugt ist die Ablageebene horizontal orientiert.

Die Steuermittel sind derart ausgebildet, dass diese die Entnahmemittel und/oder die Belademittel derart ansteuern, dass die Verpackungsvorrichtung das zuvor beschriebene Verpackungsverfahren ausführen kann. Anders ausgedrückt werden die Entnahmemittel derart angesteuert, dass mehrfach K Kunststoffspritzgussteile gleichmäßig auf U Untergruppen verteilt in dem Zwischenspeicher abgelegt werden und dass so viele Entnahmezyklen durchgeführt werden, bis in jeder Untergruppe L Kunststoffspritzgussteile vorhanden sind, wobei die Anzahl L der Kunststoffspritzgussteile jeder Untergruppe der Anzahl A von in eine Verpackungseinheit zu ladenden Kunststoffspritzgussteilen oder einem ganzzahligen Teiler von A entspricht. Mit einer nach dem Konzept der Erfindung ausgebildeten Verpackungsvorrichtung können unabhängig von der fixen Anzahl von K Kavitäten pro Verpackungseinheit eine beliebige Anzahl von A Kunststoffspritzgussteilen vorgesehen werden, ohne dass die Notwendigkeit besteht, dass die Anzahl K an Kavitäten der Anzahl A von Kunststoffspritzgussteilen pro Verpackungseinheit oder einem ganzzahligen Teiler von A entspricht. Im Hinblick auf vorteilhafte Ausgestaltungen der Vorrichtung wird auf die detaillierte, vorangehende Beschreibung des Verpackungsverfahrens verwiesen, wobei die Steuermittel die Entnahmemittel bzw. die Belademittel derart ansteuernd ausgebildet sind, dass die Vorrichtung die Weiterbildungen des zuvor detailliert beschriebenen Verpackungsverfahrens realisiert.

Besonders vorteilhaft ist es, wenn die Verpackungsvorrichtung einen als Platte ausgebildeten, flächigen Zwischenspeicher umfasst, bei dem die Ablagepositionen als Vertiefungen oder Fortsätze (Aufsteckelemente) realisiert sind, wobei der Abstand von benachbarten Vertiefungen bzw. Aufsteckelementen gleich ist wie der Abstand von in eine Verpackungseinheit überführten Kunststoffspritzgussteilen, d. h. das Rastermaß auf dem Zwischenspeicher dem Rastermaß in den Verpackungseinheiten entspricht.

Die Erfindung führt auch auf eine Spritzgussanlage mit einer K Kavitäten zum gleichzeitigen Herstellen von K Kunststoffspritzgussteilen aufweisenden Spritzgussvorrichtung, wobei die Spritzgussanlage zur Herstellung von als Pipettenspitzen oder medizinische Reaktionsgefäße ausgebildeten Kunststoffspritzgussteilen ausgebildet ist. Die Spritzgussanlage umfasst mindestens eine, vorzugsweise ausschließlich eine, wie zuvor beschrieben ausgebildete Verpackungsvorrichtung.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine Spritzgussvorrichtung mit einer Spritzgussform, die in dem gezeigten Ausführungsbeispiel eine fixe Anzahl von K = 16 Kavitäten zum gleichzeitigen Herstellen von K, als Pipettenspitzen oder medizinische Reaktionsbehälter ausgebildeten Kunststoffspritzgussteilen aufweist,
- Fig. 2a bis Fig. 2e:: einen Zwischenspeicher nach jeweils einer unterschiedlichen Anzahl von Entnahmezyklen, wobei in dem gezeigten Ausführungsbeispiel auf dem Zwischenspeicher Untergruppen entstehen, die bei jedem Entnahmezyklus, d.h. nach jedem Schuss, jeweils um ein Kunststoffspritzgussteil erweitert werden,
- Fig. 3:: ein vergrößertes Detail aus Fig. 2e,
- Fig. 4:: eine Verpackungseinheit mit in dem gezeigten Ausführungsbeispiel einer Anzahl A = 15 Kunststoffspritzgussteilen, und
- Fig. 5:: eine alternative Verpackungseinheit A = 30 Verpackungseinheiten.

In den Figuren sind gleiche Elemente und Elemente mit der gleichen Funktion mit den gleichen Bezugszeichen gekennzeichnet.

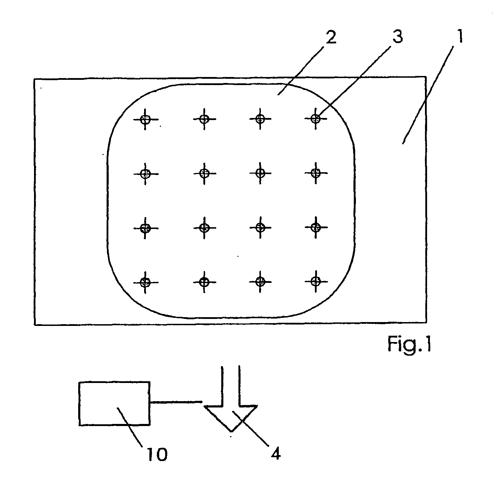

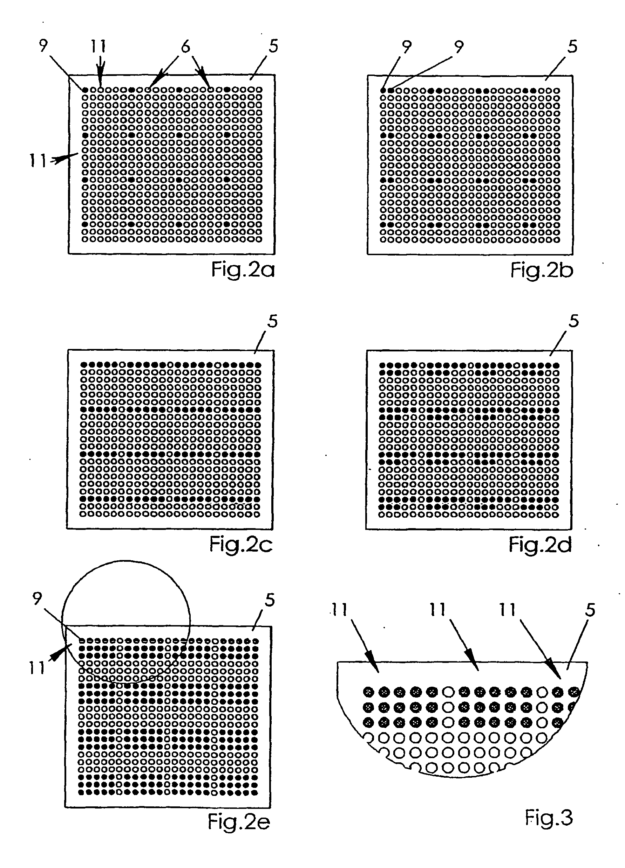

In Fig. 1 ist als Teil einer Spritzgussanlage eine Spritzgussvorrichtung 1, umfassend ein Spritzgusswerkzeug 2, mit K = 16 Kavitäten 3 zum gleichzeitigen Herstellen von K = 16 als Pipettenspitzen oder medizinische Reaktionsgefäße ausgebildeten Kunststoffspritzgussteilen gezeigt. Der Spritzgussvorrichtung 1 sind beispielsweise als Sauggreifer, vorzugsweise mit einer der Anzahl der Kavitäten entsprechenden Saugelementen, ausgebildete Entnahmemittel 4, die lediglich stilisiert als Pfeil angedeutet sind, zugeordnet, wobei die Entnahmemittel Teil einer nicht mit einem Bezugszeichen versehenen Verpackungsvorrichtung sind. Die Entnahmemittel 4 dienen zur Entnahme der Kunststoffspritzgussteile aus den Kavitäten 3 und zur Überführung der Kunststoffspritzgussteile in einen in Fig. 2a gezeigten Zwischenspeicher 5. Der Zwischenspeicher 5 weist eine Vielzahl von als Ausnehmungen ausgebildeten Ablagepositionen 6 auf, wobei die Ablagepositionen 6 in einer gemeinsamen, hier horizontal angeordneten, Ablageebene 7 angeordnet sind.

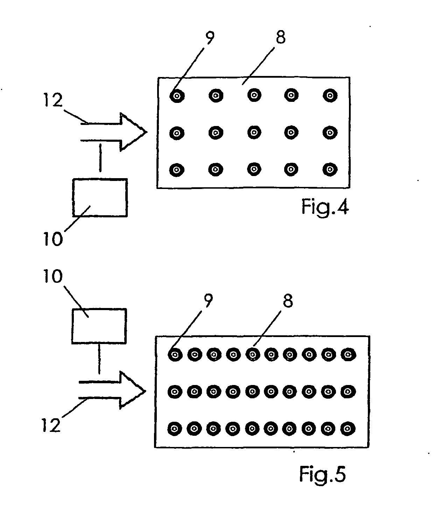

Aufgabe ist es, mit der vorhandenen Spritzgussmaschine 1, aufweisend ein Spritzgusswerkzeug 2, mit K = 16 Kavitäten 3 eine in Fig. 4 dargestellte Verpackungseinheit 8 mit A = 15 Kunststoffspritzgussteilen 9 zu bestücken oder alternativ eine in Fig. 5 gezeigte Verpackungseinheit 8 mit A = 30 Kunststoffspritzgussteilen 9.

Hierzu steuern in Fig. 1 angedeutete, als Steuergerät ausgebildete Steuermittel 10 die Entnahmemittel 4 derart an, dass auf dem Zwischenspeicher 5 in der Ablageebene 7 insgesamt 16 Untergruppen 11 gebildet werden, wobei in dem gezeigten Ausführungsbeispiel jede Untergruppe 11 bei jedem Entnahmezyklus, d.h. nach jedem Schuss um ein Kunststoffspritzgussteil 9 erweitert wird. Der Entnahmezyklus (inklusive Abladen auf dem Zwischenspeicher) wird insgesamt 15 mal wiederholt, bis der in Fig. 2e gezeigte Zustand erreicht wird, bei dem jede Untergruppe 11 insgesamt 15 Kunststoffspritzgussteile 9 umfasst, die in jeder Untergruppe in drei Reihen und fünf Spalten angeordnet sind. Bemerkenswert ist, dass, vergleicht man Fig. 1a mit Fig. 2a, die Relativposition der Kavitäten 3 der Relativposition der bei einem Entnahmezyklus auf dem Zwischenspeicher 5 abgelegten Kunststoffspritzgussteile 9 entspricht. Nach jedem Entnahmezyklus wird pro Untergruppe 11 in einer zu der vorhergehenden Ablageposition versetzten Ablageposition ein Kunststoffspritzgussteil 9 auf dem Zwischenspeicher 5 abgelegt, wie sich aus einem Vergleich der Figuren zu Fig. 2a bis Fig. 2e ergibt, wobei Fig. 2a den Zwischenspeicher 5 nach einem ersten Entnahmezyklus, Fig. 2b den Zwischenspeicher 5 nach einem zweiten Entnahmezyklus, Fig. 2c den Zwischenspeicher 5 nach einem fünften Entnahmezyklus, Fig. 2d den Zwischenspeicher 5 nach einem achten Entnahmezyklus und Fig. 2e den Zwischenspeicher 5 nach fünfzehn Entnahmezyklen zeigt.

Fig. 3 zeigt eine vergrößerte Darstellung eines Teils der vollständig bestückten Untergruppen 11 auf dem Zwischenspeicher 5. Insgesamt wurden U = 16 Untergruppen geschaffen.

Nach Fertigstellung der Untergruppen 11 auf dem Zwischenspeicher 5 können nun Verpackungseinheiten 8 beladen werden. Sollen beispielsweise die in Fig. 4 am Beispiel einer einzigen Verpackungseinheit 8 dargestellten Verpackungseinheiten 8 mit jeweils A = 15 Kunststoffspritzgussteilen 9 beladen werden, so können aus dem Zwischenspeicher 5 beispielsweise nacheinander jeweils eine Verpackungseinheit 8 mit jeweils einer Untergruppe 11 an Kunststoffspritzgussteilen 9 beladen werden. Alternativ können gleichzeitig beispielsweise zwei, vier oder acht (wenn gewünscht auch sechzehn) Verpackungseinheiten 8 mit jeweils einer Untergruppe 11 beladen werden, wobei jede Untergruppe 11 ausschließlich Kunststoffspritzgussteile 9 aus einer definierten, d.h. bestimmten Kavität 3 aufweist, so dass eine vollständige Rückverfolgbarkeit gegeben ist. Zum Beladen der Verpackungseinheit/einheiten 8 aus dem Zwischenspeicher 5 sind lediglich über einen Pfeil angedeutete, beispielsweise als Sauggreifer ausgebildete Belademittel 12 vorgesehen, die unmittelbar von den Steuermitteln 10 angesteuert werden. Bei Bedarf können den Entnahmemitteln 4 und den Belademitteln 12 unterschiedliche Logikeinheiten zugeordnet werden - bevorzugt ist es jedoch, wenn eine gemeinsame Steuereinheit für die Entnahmemittel 4 und die Belademittel 12 vorgesehen sind.

Sollten alternativ die in Fig. 5 gezeigten Verpackungseinheiten 8 mit jeweils A = 15 Kunststoffspritzgussteilen 9 beladen werden, so müssen hierzu zwei der Untergruppen 11 aus dem in Fig. 2e gezeigten Zwischenspeicher 5 zusammengefasst werden. In der Verpackungseinheit 8 gemäß Fig. 5 befinden sich dann ausschließlich Kunststoffspritzgussteile 9 aus zwei bestimmten Kavitäten. Es lassen sich gleichzeitig eine einzige Verpackungseinheit, zwei, vier oder acht Verpackungseinheiten mit Kunststoffspritzgussteilen 9 bzw. jeweils mit zwei Untergruppen 11 aus dem Zwischenspeicher 5 beladen. Hierzu müssen lediglich die Belademittel 12 entsprechend ausgebildet sein bzw. eine entsprechende Kapazität aufweisen.

## Patentansprüche

1. Verpackungsverfahren zum Verpacken von als Pipettenspitzen oder medizinische Reaktionsgefäße ausgebildeten Kunststoffspritzgussteilen (9) umfassend die Schritte:
• gleichzeitige Entnahme von K Kunststoffspritzgussteilen (9) aus K Kavitäten (3), und
• Ablage der Kunststoffspritzgussteile (9) in einem Zwischenspeicher (5), und
• Beladen von V Verpackungseinheit(en) (8) jeweils mit A Kunststoffspritzgussteilen (9) aus dem Zwischenspeicher (5),
**dadurch gekennzeichnet,**
• **dass** als Zwischenspeicher (5) ein Zwischenspeicher (5) mit einer Vielzahl von in einer Ablageebene (7) nebeneinander angeordneten Ablagepositionen (6) eingesetzt wird, und
• **dass** die K Kunststoffspritzgussteile (9) gleichmäßig auf U Untergruppen (11) verteilt in dem Zwischenspeicher (5) abgelegt werden, und
• **dass** mehrfach und solange K Kunststoffspritzgussteile (9) aus den K Kavitäten (3) entnommen und gleichmäßig auf die U Untergruppen (11) verteilt werden, bis jede Untergruppe (11) L Kunststoffspritzgussteile (9) aufweist,
o wobei die Anzahl L der Kunststoffspritzgussteile (9) einer Untergruppe (11) der Anzahl A von in eine Verpackungseinheit (8) zu ladenden Kunststoffspritzgussteilen (9) oder einem ganzzahligen Teiler von A entspricht.

2. Verfahren nach Anspruch 1, **dadurch gekennzeichnet,**
**dass** die K Kunststoffspritzgussteile (9) derart im Zwischenspeicher (5) abgelegt werden, dass die Anzahl U der Untergruppen (11) der Anzahl V der Verpackungseinheiten (8) oder einem ganzzahligen Vielfachen von V nicht entspricht oder entspricht.

3. Verfahren nach einem der Ansprüche 1 oder 2, **dadurch gekennzeichnet,**
**dass** im Zwischenspeicher (5) mehr Kunststoffspritzgussteile (9) pro Fläche abgelegt werden als in den Verpackungseinheiten (8).

4. Verfahren nach einem der vorhergehenden Ansprüche, **dadurch gekennzeichnet,**
**dass** die Kunststoffspritzgussteile (9) einer bestimmten Kavität (3) oder aus bestimmten Kavitäten (3) immer in einer bestimmten Untergruppe (11) oder in bestimmten Untergruppen (11) abgelegt wirdiwerden.

5. Verfahren nach einem der vorhergehenden Ansprüche, **dadurch gekennzeichnet,**
**dass** jede Untergruppe (11) bei jedem Entnahmezyklus immer um die gleiche Anzahl von Kunststoffspritzgussteilen (9), vorzugsweise ein einziges Kunststoffspritzgussteil (9), erweitert wird.

6. Verpackungsvorrichtung zum Verpacken von als Pipettenspitzen oder medizinische Reaktionsgefäße ausgebildeten Kunststoffspritzgussteilen (9), umfassend:
■ zum gleichzeitigen Entnehmen von K Kunststoffspritzgussteilen (9) aus K Kavitäten (3) und zum Ablegen der Kunststoffspritzgussteile (9) in einem Zwischenspeicher (5) ausgebildete Entnahmemittel (4), und
■ einen Zwischenspeicher (5), und
■ zum Beladen von V Verpackungseinheiten (8) jeweils mit A Kunststoffspritzgussteilen (9) aus dem Zwischenspeicher (5) ausgebildete Belademittel (12), und
■ zum Ansteuern der Entnahmemittel (4) und/oder der Belademittel (12) ausgebildete Steuermittel (10),
**dadurch gekennzeichnet,**
■ **dass** der Zwischenspeicher (5) eine Vielzahl von in einer Ablageebene (7) nebeneinander angeordnete Ablagepositionen (6) aufweist, und
■ **dass** die Steuermittel (10) die Entnahmemittel (4) und/oder die Belademittel (12) derart ansteuernd ausgebildet sind,
• **dass** die K Kunststoffspritzgussteile (9) gleichmäßig auf U Untergruppen (11) verteilt in dem Zwischenspeicher (5) abgelegt werden, und derart
• **dass** mehrfach und solange K Kunststoffspritzgussteile (9) aus den K Kavitäten (3) entnommen und gleichmäßig auf die U Untergruppen (11) verteilt werden, bis jede Untergruppe (11) L Kunststoffspritzgussteile (9) aufweist,
o wobei die Anzahl L der Kunststoffspritzgussteile (9) einer Untergruppe (11) der Anzahl A von in eine Verpackungseinheit (8) zu ladenden Kunststoffspritzgussteilen (9) oder einem ganzzahligen Teiler von A entspricht.

7. Vorrichtung nach Anspruch 6, **dadurch gekennzeichnet,**
**dass** die Steuermittel (10) die Entnahmemittel (4) derart ansteuernd ausgebildet sind, dass die K Kunststoffspritzgussteile (9) derart im Zwischenspeicher (5) abgelegt werden, dass die Anzahl U der Untergruppen (11) der Anzahl V der Verpackungseinheiten (8) oder einem ganzzahligen Vielfachen von V entspricht oder nicht entspricht.

8. Vorrichtung nach einem der Ansprüche 6 oder 7, **dadurch gekennzeichnet,**
**dass** die Steuermittel (10) die Entnahmemittel (4) derart ansteuernd ausgebildet sind, dass die Kunststoffspritzgussteile (9) einer bestimmten Kavität (3) oder aus bestimmten Kavitäten (3) immer in einer bestimmten Untergruppe (11) oder in bestimmten Untergruppen (11) abgelegt wird/werden.

9. Vorrichtung nach einem der Ansprüche 6 bis 8, **dadurch gekennzeichnet,**
**dass** der Zwischenspeicher (5) derart ausgebildet ist, dass dieser mehr Kunststoffspritzgussteile (9) pro Flächeneinheit aufnehmen kann als die Verpackungseinheiten (8), oder dass das Rastermaß für die Kunststoffspritzgussteile (9) des Zwischenspeichers (5) dem Rastermaß für die Kunststoffspritzgussteile (9) in den Verpackungseinheiten (8) entspricht.

10. Vorrichtung nach einem der Ansprüche 6 bis 9, **dadurch gekennzeichnet,**
**dass** die Steuermittel (10) die Entnahmemittel (4) derart ansteuernd ausgebildet sind, dass jede Untergruppe (11) nach jedem Entnahmezyklus immer um die gleich Anzahl von Kunststoffspritzgussteilen (9), vorzugsweise einem einzigen Kunststoffspritzgussteil (9), wächst.

11. Vorrichtung nach einem der Ansprüche 6 bis 10, **dadurch gekennzeichnet,**
**dass** die Steuermittel (10) die Entnahmemittel (4) derart ansteuernd ausgebildet sind, dass die U Untergruppen (11) als voneinander separate Einheiten nebeneinander, vorzugsweise mit Seitenabstand zueinander, abgelegt werden.

12. Vorrichtung nach einem der Ansprüche 6 bis 11, **dadurch gekennzeichnet,**
**dass** die Steuermittel (10) die Entnahmemittel (4) derart ansteuernd ausgebildet sind, dass die bei jedem Entnahmezyklus aus den K Kavitäten (3) entnommenen K Kunststoffspritzgussteile (9) in derselben Relativposition zueinander im Zwischenspeicher (5) abgelegt werden.

13. Vorrichtung nach einem der Ansprüche 6 bis 12, **dadurch gekennzeichnet,**
**dass** der Zwischenspeicher (5) als Platte mit einer der Ablagepositionen (6) entsprechenden Anzahl von Vertiefungen oder Aufsteckelementen ausgebildet ist.

14. Vorrichtung nach einem der Ansprüche 6 bis 13, **dadurch gekennzeichnet,**
**dass** die Steuermittel (10) die Belademittel (12) derart ansteuernd ausgebildet sind, dass die V Verpackungseinheiten (8) jeweils mit einer einzigen Untergruppe (11) oder jeweils mit mehreren Untergruppen (11) beladen werden.

15. Spritzgussanlage mit einer K Kavitäten (3) zur gleichzeitigen Herstellung von K als Pipettenspitzen oder medizinische Reaktionsgefäße ausgebildeten Kunststoffspritzgussteilen (9) aufweisenden Spritzgussvorrichtung (1) und mit einer Verpackungsvorrichtung nach einem der Ansprüche 10 bis 14.

## Claims

1. Packaging method for packaging plastics material injection-moulded parts (9) formed as pipette tips or medical reaction vessels, comprising the steps of:
• simultaneously removing K plastics material injection-moulded parts (9) from K cavities (3) and
• depositing the plastics material injection-moulded parts (9) in an intermediate store (5) and
• loading each of V packaging unit(s) (8) with A plastics material injection-moulded parts (9) from the intermediate store (5),
**characterised in that**
• an intermediate store (5) comprising a plurality of depositing positions (6) arranged side by side in a deposition plane (7) is used as an intermediate store (5), and
• **in that** the K plastics material injection-moulded parts (9) are deposited, uniformly distributed into U subgroups (11) in the intermediate store (5), and
• **in that** K plastics material injection-moulded parts (9) are repeatedly removed from the K cavities (3) and distributed uniformly among the U subgroups (11) until each subgroup (11) comprises L plastics material injection-moulded parts (9),
■ the quantity L of the plastics material injection-moulded parts (9) in a subgroup (11) corresponding to the quantity A of plastics material injection-moulded parts (9) to be loaded into a packaging unit (8), or to an integer divisor of A.

2. Method according to claim 1, **characterised in that** the K plastics material injection-moulded parts (9) are deposited in the intermediate store (5) in such a way that the quantity U of the subgroups (11) does not correspond or corresponds to the quantity V of the packaging units (8) or to an integer multiple of V.

3. Method according to either claim 1 or claim 2, **characterised in that** more plastics material injection-moulded parts (9) per unit are deposited in the intermediate store (5) than in the packaging units (8).

4. Method according to any one of the preceding claims, **characterised in that** the plastics material injection-moulded parts (9) from a certain cavity (3) or from certain cavities (3) is/are always deposited in a certain subgroup (11) or in certain subgroups (11).

5. Method according to any one of the preceding claims, **characterised in that** each subgroup (11) is always expanded by the same quantity of plastics material injection-moulded parts (9), preferably a single plastics material injection-moulded part (9), in each removal cycle.

6. Packaging device for packaging plastics material injection-moulded parts (9) formed as pipette tips or medical reaction vessels, comprising:
• removal means (4) configured for simultaneously removing K plastics material injection-moulded parts (9) from K cavities (3) and for depositing the plastics material injection-moulded parts (9) in an intermediate store (5), and
• an intermediate store (5), and
• loading means (12) configured for loading each of the V packaging units (8) with A plastics material injection-moulded parts (9) from the intermediate store (5), and
• control means (10) configured for activating the removal means (4) and/or the loading means (12),
**characterised in that**
• the intermediate store (5) has a plurality of depositing positions (6) arranged side by side in a deposition plane (7), and
• **in that** the control means (10) are configured for activating the removal means (4) and/or the loading means (12) in such a way that
■ the K plastics material injection-moulded parts (9) are deposited, uniformly distributed into U subgroups (11), in the intermediate store (5), and in such a way that
■ K plastics material injection-moulded parts (9) are repeatedly removed from the K cavities (3) and distributed uniformly among the U subgroups (11) until each subgroup (11) comprises L plastics material injection-moulded parts (9),
○ the quantity L of the plastics material injection-moulded parts (9) in a subgroup (11) corresponding to the quantity A of plastics material injection-moulded parts (9) to be loaded into a packaging unit (8) or to an integer divisor of A.

7. Device according to claim 6, **characterised in that** the control means (10) are configured for activating the removal means (4) in such a way that the K plastics material injection-moulded parts (9) are deposited in the intermediate store (5) in such a way that the quantity U of subgroups (11) corresponds or does not correspond to the quantity V of the packaging units (8) or to an integer multiple of V.

8. Device according to any one of claims 6 or 7, **characterised in that** the control means (10) are configured for activating the removal means (4) in such a way that the plastics material injection-moulded part(s) (9) from a certain cavity (3) or from certain cavities (3) is/are always deposited in a certain subgroup (11) or in certain subgroups (11).

9. Device according to any one of claims 6 to 8, **characterised in that** the intermediate store (5) is configured in such a way that it can receive more plastics material injection-moulded parts (9) per unit of surface area than the packaging units (8), or **in that** the grid dimension for the plastics material injection-moulded parts (9) of the intermediate store (5) corresponds to the grid dimension for the plastics material injection-moulded parts (9) in the packaging units (8).

10. Method according to any one of claims 6 to 9, **characterised in that** the control means (10) are configured for activating the removal means (4) in such a way that each subgroup (11) always expands by the same quantity of plastics material injection-moulded parts (9), preferably a single plastics material injection-moulded part (9), after each removal cycle.

11. Device according to any one of claims 6 to 10, **characterised in that** the control means (10) are configured for activating the removal means (4) in such a way that the U subgroups (11) are deposited side by side as separate units, preferably with lateral spacing from one another.

12. Device according to any one of claims 6 to 11, **characterised in that** the control means (10) are configured for activating the removal means (4) in such a way that the K plastics material injection-moulded parts (9) which are removed from the K cavities (3) in each removal cycle are deposited in the intermediate store (5) in the same position relative to one another.

13. Device according to any one of claims 6 to 12, **characterised in that** the intermediate store (5) is configured as a plate having a quantity of recesses or clip-on elements, said quantity corresponding to the depositing positions (6).

14. Device according to any one of claims 6 to 13, **characterised in that** the control means (10) are configured for activating the loading means (12) in such a way that the V packaging units (8) are each loaded with a single subgroup (11) or are each loaded with a plurality of subgroups (11).

15. Injection moulding machine comprising an injection moulding device (1) having K cavities (3) for simultaneously producing K plastics material injection-moulded parts (9) formed as pipette tips or medical reaction vessels, and comprising a packaging device according to any one of claims 10 to 14.

## Revendications

1. Procédé d'emballage destiné à emballer des pièces (9) en matière plastique moulée par injection configurées comme pointes de pipette ou récipients de réaction médicaux, le procédé comportant les étapes qui consistent à :
- prélever simultanément K pièces (9) en matière plastique moulée par injection dans K cavités (3),
- déposer les pièces (9) en matière plastique moulée par injection dans une réserve intermédiaire (5) et
- charger V unités (8) d'emballage de A pièces (9) en matière plastique moulée par injection provenant de la réserve intermédiaire (5),
**caractérisé en ce que**
- le procédé utilise comme réserve intermédiaire (5) une réserve intermédiaire (5) qui présente plusieurs positions de pose (6) disposées les unes à côté des autres dans un plan de pose (7),
- **en ce que** les K pièces (9) en matière plastique moulée par injection sont déposées dans la réserve intermédiaire (5) en étant réparties uniformément en U sous-groupes (11),
- **en ce que** K pièces (9) en matière plastique moulée par injection sont prélevées plusieurs fois dans les K cavités (3) et sont réparties entre les U sous-groupes (11) jusqu'à ce que chaque sous-groupe (11) présente L pièces (9) en matière plastique moulée par injection,
■ le nombre L de pièces (9) en matière plastique moulée par injection d'un sous-groupe (11) correspondant au nombre A de pièces (9) en matière plastique moulée par injection à charger dans une unité d'emballage (8) ou à un diviseur entier de A.

2. Procédé selon la revendication 1, **caractérisé en ce que** les K pièces (9) en matière plastique moulée par injection sont déposées dans la réserve intermédiaire (5) de telle sorte que le nombre U des sous-groupes (11) ne corresponde pas ou corresponde au nombre V des unités d'emballages (8) ou à un multiple entier de V.

3. Procédé selon l'une des revendications 1 ou 2, **caractérisé en ce que** le nombre de pièces (9) en matière plastique moulée par injection déposées par unité de surface dans la réserve intermédiaire (5) est plus grand que dans les unités d'emballage (8).

4. Procédé selon l'une des revendications précédentes, **caractérisé en ce que** les pièces (9) en matière plastique moulée par injection d'une cavité (3) définie ou de cavités (3) définies est/sont toujours déposée(s) dans un sous-groupe (11) défini ou dans des sous-groupes (11) définis.

5. Procédé selon l'une des revendications précédentes, **caractérisé en ce que** lors de chaque cycle de prélèvement, chaque sous-groupe (11) est augmenté du même nombre de pièces (9) en matière plastique moulée par injection et de préférence d'une seule pièce (9) en matière plastique moulée par injection.

6. Dispositif d'emballage destiné à emballer des pièces (9) en matière plastique moulée par injection configurées sous la forme de pointes de pipette ou de récipients de réaction médicaux, le dispositif comportant :
- des moyens de prélèvement (4) configurés pour enlever simultanément K pièces (9) en matière plastique moulée par injection provenant de K cavités (3) et pour déposer les pièces (9) en matière plastique moulée par injection dans une réserve intermédiaire (5),
- une réserve intermédiaire (5),
- des moyens de chargement (12) configurés pour charger chacune parmi V unités d'emballage (8) de A pièces (9) en matière plastique moulée par injection provenant de la réserve intermédiaire (5) et
- des moyens de commande (10) configurés pour commander les moyens de prélèvement (4) et/ou les moyens de chargement (12),
**caractérisé en ce que**
- la réserve intermédiaire (5) présente plusieurs positions de pose (6) disposées les unes à côté des autres dans un plan de pose (7),
- **en ce que** les moyens de commande (10) sont configurés pour commander les moyens de prélèvement (4) et/ou les moyens de chargement (12) de telle sorte que
■ les K pièces (9) en matière plastique moulée par injection sont déposées dans la réserve intermédiaire (5) en étant réparties uniformément en U sous-groupes (11),
■ que K pièces (9) en matière plastique moulée par injection sont prélevées plusieurs fois dans les K cavités (3) et sont réparties uniformément entre les U sous-groupes (11) jusqu'à ce que chaque sous-groupe (11) présente L pièces (9) en matière plastique moulée par injection,
○ le nombre L des pièces (9) en matière plastique moulée par injection d'un sous-groupe (11) correspondant au nombre A de pièces (9) en matière plastique moulée par injection à charger dans une unité d'emballage (8) ou à un diviseur entier de A.

7. Dispositif selon la revendication 6, **caractérisé en ce que** les moyens de commande (10) sont configurés pour commander les moyens de prélèvement (4) de telle sorte que les K pièces (9) en matière plastique moulée par injection soient déposées dans la réserve intermédiaire (5) de telle sorte que le nombre U des sous-groupes (11) corresponde ou ne corresponde pas au nombre V des unités d'emballages (8) ou à un multiple entier de V.

8. Dispositif selon l'une des revendications 6 ou 7, **caractérisé en ce que** les moyens de commande (10) sont configurés pour commander les moyens de prélèvement (4) de telle sorte que les pièces (9) en matière plastique moulée par injection d'une cavité (3) définie ou de cavités (3) définies soient toujours déposées dans un sous-groupe (11) défini ou dans des sous-groupes (11) définis.

9. Dispositif selon l'une des revendications 6 à 8, **caractérisé en ce que** la réserve intermédiaire (5) est configurée de telle sorte qu'elle puisse reprendre par unité de surface un plus grand nombre de pièces (9) en matière plastique moulée par injection que les unités d'emballage (8) ou **en ce que** le pas de grille des pièces (9) en matière plastique moulée par injection de la réserve intermédiaire (5) corresponde au pas de grille des pièces (9) en matière plastique moulée par injection dans les unités d'emballage (8).

10. Dispositif selon l'une des revendications 6 à 9, **caractérisé en ce que** les moyens de commande (10) sont configurés pour commander les moyens de prélèvement (4) de telle sorte qu'après chaque cycle de prélèvement, chaque sous-groupe (11) augmente toujours du même nombre de pièces (9) en matière plastique moulée par injection et de préférence d'une seule pièce (9) en matière plastique moulée par injection.

11. Dispositif selon l'une des revendications 6 à 10, **caractérisé en ce que** les moyens de commande (10) sont configurés pour commander les moyens de prélèvement (4) de telle sorte que les U sous-groupes (11) soient déposés sous la forme d'unités distinctes les unes des autres déposées les unes à côté des autres et de préférence à distance latérale les unes par rapport aux autres.

12. Dispositif selon l'une des revendications 6 à 11, **caractérisé en ce que** les moyens de commande (10) sont configurés pour commander les moyens de prélèvement (4) de telle sorte que lors de chaque cycle de prélèvement, K pièces (9) en matière plastique moulée par injection prélevées dans les K cavités (3) soient déposées dans la réserve intermédiaire (5) dans la même position relative mutuelle.

13. Dispositif selon l'une des revendications 6 à 12, **caractérisé en ce que** la réserve intermédiaire (5) est configurée comme plaque présentant un nombre de creux ou d'éléments d'enfichage qui correspond aux positions de pose (6).

14. Dispositif selon l'une des revendications 6 à 13, **caractérisé en ce que** les moyens de commande (10) sont configurés pour commander les moyens de chargement (12) de telle sorte que chacune des V unités d'emballage (8) soit chargée d'un seul sous-groupe (11) ou de plusieurs sous-groupes (11).

15. Installation de moulage par injection avec un dispositif (1) de moulage par injection présentant K cavités (3), destiné à fabriquer simultanément K pièces (9) en matière plastique moulée par injection configurées comme pointes de pipettes ou comme récipients de réaction médicale, et un dispositif d'emballage selon l'une des revendications 10 à 14.
